# DEMANDE DE BREVET EUROPEEN

(11) **EP 0 822 049 A1**
(43) Date de publication de la demande: **04.02.1998**
(21) Numéro de dépôt: 97401799.8
(22) Date de dépôt: 25.07.1997
(51) Int. Cl.: B29C 45/14, B29C 37/00, H01J 29/92

(54) **Procédé de surmoulage d'une pièce en silicone sur un élément allongé et dispositif de connexion haute tension obtenu par ce procédé**

(30) Priorité: 26.07.1996 FR 9609468
(71) Demandeur: Connectic Metallo, 94400 Vitry sur Seine (FR)
(72) Inventeur: Loriot, Franck Olivier, 75014 Paris (FR)
(74) Mandataire: Durand, Yves Armand Louis

(57) **Abrégé**

La présente invention concerne un procédé de surmoulage d'une pièce en silicone sur un élément allongé ainsi qu'un dispositif de connexion haute tension obtenu par ce procédé.

Ce dispositif comprend une pièce en silicone (1) formée d'une ventouse (5) et d'un tube débouchant (6) dans lequel passe un câble électrique (2) dont l'extrémité (3) est raccordée à un connecteur (8), un manchon en silicone (7) étant interposé entre le câble (2) et le tube (6) de la pièce en silicone (1) pour assurer une parfaite étanchéité au courant électrique.

Ce dispositif peut être notamment raccordé à un tube cathodique.

## Description

La présente invention a essentiellement pour objet un procédé de surmoulage d'une pièce en silicone sur un élément allongé.

Elle vise également un dispositif de connexion haute tension comportant application de ce procédé.

Pour réaliser un dispositif de connexion haute tension, il a déjà été proposé de surmouler une pièce en silicone sur un câble électrique portant à son extrémité un connecteur susceptible d'être clippé sur un appareil à alimenter en courant haute tension, tel que par exemple un tube cathodique.

La pièce en silicone se compose essentiellement d'une ventouse à laquelle est associé un tube à l'intérieur duquel passe le câble, l'extrémité du câble portant le connecteur débouchant bien entendu dans la ventouse.

Toutefois, ce genre de dispositif pose d'importants problèmes sur le plan de l'étanchéité au courant électrique.

En effet, lorsqu'après surmoulage à chaud de la pièce en silicone sur la gaine du câble dont la matière est différente, on effectue le refroidissement de l'ensemble, le câble se rétracte davantage que la pièce en silicone, de sorte qu'un petit espace ou intervalle est laissé entre le câble et le tube qui reçoit ce câble. C'est dire que l'étanchéité au courant électrique est défectueuse, ce qui, comme on le comprend, peut être très dangereux, lorsque l'on à faire à un courant haute tension.

Aussi, la présente invention a notamment pour but de remédier à ce problème en proposant un procédé et un dispositif assurant une étanchéité parfaite aux arcs électriques entre le câble et la pièce en silicone surmoulée sur lui.

A cet effet, l'invention a pour objet un procédé de surmoulage par chauffage puis refroidissement d'une pièce en silicone sur et autour d'un élément allongé en une autre matière subissant au refroidissement une rétraction supérieure à celle du silicone, caractérisé en ce qu'on introduit un manchon en silicone sur l'élément allongé avant d'effectuer le surmoulage de la pièce en silicone sur lui pour que ledit manchon, en adhérant d'une part au silicone de la pièce sous l'effet du chauffage et en compensant d'autre part au refroidissement la rétraction de l'élément allongé qui est supérieure à celle de la pièce en silicone, procure une étanchéité parfaite entre ladite pièce et l'élément allongé.

Ce procédé est encore caractérisé en ce qu'avant son introduction sur l'élément allongé, le manchon en silicone possède un diamètre plus petit que celui dudit élément allongé.

Suivant une autre caractéristique de ce procédé, la pièce en silicone est moulée pour former un tube prolongeant une ventouse, tandis que l'élément allongé entouré par ce tube est un câble électrique formé d'un fil métallique entouré d'une gaine isolante en matière plastique.

Cette invention vise encore un dispositif de connexion haute tension réalisé selon le procédé répondant à l'une et/ou l'autre des caractéristiques précédentes, et du type comprenant un câble électrique dont une extrémité passe dans un tube débouchant dans une ventouse et porte un connecteur susceptible d'être clippé sur un appareil à alimenter en courant haute tension tel que par exemple un tube cathodique, caractérisé en ce que la ventouse et son tube associé en silicone sont surmoulés sur l'extrémité du câble qui comporte un manchon en silicone interposé entre câble et tube, et en ce que ledit connecteur présente la forme d'un U dont l'embase est arquée et convexe en direction de l'intérieur des branches du U pour permettre un soudage encastré du fil conducteur du câble sur le connecteur.

Ce dispositif est encore caractérisé en ce que les branches du U comportent à leur extrémité libre des griffes tournées vers l'extérieur du U.

Mais d'autres caractéristiques et avantages de l'invention apparaîtront mieux dans la description détaillée qui suit et se réfère aux dessins annexés, donnés uniquement à titre d'exemple, et dans lesquels :

Les figures 1 à 5 illustrent en élévation et coupe axiale, les étapes successives effectuées pour réaliser un dispositif de connexion haute tension selon cette invention.

La figure 6 est une vue en perspective de l'extrémité du câble seul avec son connecteur associé.

En se reportant plus particulièrement aux figures 5 et 6, on voit un dispositif de connexion haute tension se composant essentiellement d'une pièce 1 en silicone surmoulée sur un câble 2 qui, comme connu en soi, comporte un fil métallique électriquement conducteur dont on voit l'extrémité dénudée en 3 et qui est entouré d'une gaine 4 en une matière autre que le silicone, c'est-à-dire une matière plastique isolante appropriée.

La pièce en silicone 1 se compose d'une ventouse 5 de forme sensiblement conique pouvant s'appliquer sur l'appareil à alimenter en courant et à laquelle est associé un tube 6 dans lequel passe le câble 2. Le tube 6 débouche dans la ventouse 5 et, à ce niveau, l'extrémité dénudée 3 porte un connecteur 8 permettant le raccordement électrique à l'appareil.

Toutes les dispositions ci-dessus sont connues en soi et ne nécessitent pas d'explications complémentaires.

Conformément à l'invention, et comme on le voit sur la figure 5, un manchon en silicone 7 est interposé entre le câble 2 et le tube 6 de la pièce en silicone 1, ce manchon réalisant une étanchéité parfaite au courant haute tension, entre ledit câble 2 et ledit tube 6.

En se référant plus particulièrement à la figure 6, on voit que le connecteur 8 présente sensiblement la forme d'un U dont l'embase 9 est arquée et convexe, de façon à s'étendre quelque peu à l'intérieur des deux branches 10 du U. Ainsi, l'extrémité dénudée 3 du câble 2 pourra être soudée d'une manière encastrée dans l'embase arquée 9, comme cela apparaît clairement sur la figure 6.

On observera encore que les branches 10 du U comportent à leur extrémité libre des griffes ou analogues 11 tournées vers l'extérieur du U que forme le connecteur 8, et cela de façon à réaliser un bon accrochage du connecteur sur une borne femelle (non représentée) de l'appareil à alimenter en courant haute tension, tel que par exemple un tube cathodique.

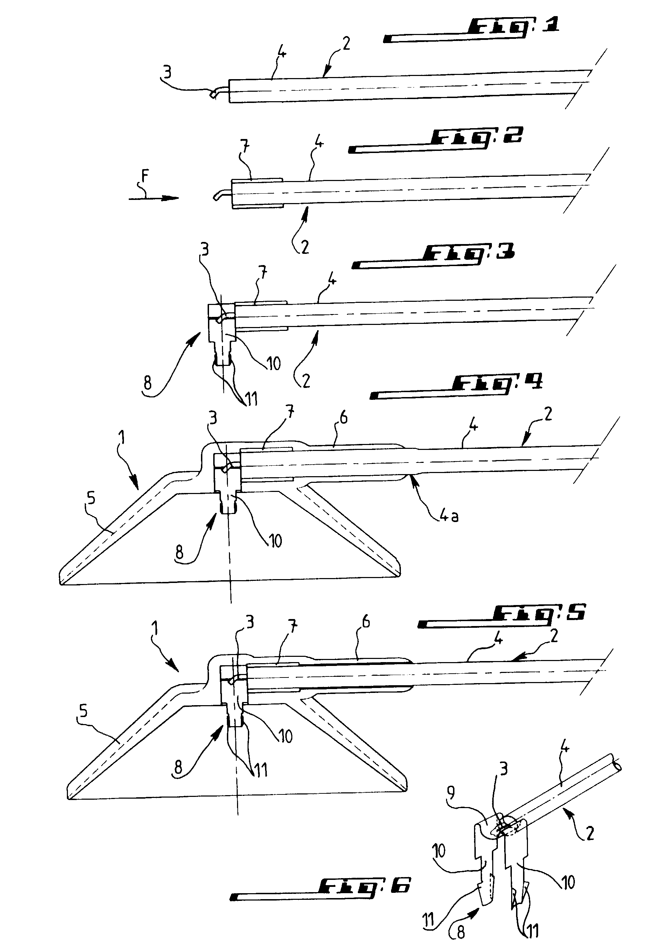

On décrira maintenant en détail comment s'effectue la fabrication du dispositif qui vient d'être décrit, en se reportant successivement aux figures 1 à 5.

Tout d'abord, comme on le voit sur la figure 1, l'extrémité du câble 2 dont la gaine 4 est en une matière plastique isolante, est dénudée pour faire apparaître l'extrémité 3 du fil métallique conducteur.

Ensuite, on insère sur la gaine 4 du câble 2, à l'extrémité de ce câble, et cela suivant la flèche F, un manchon en silicone 7.

Il est à noter qu'à l'état libre, le manchon 7 possède un diamètre intérieur légèrement plus petit que le diamètre extérieur de la gaine 4, de sorte que ledit manchon est introduit légèrement à force sur le câble 2. Autrement dit, le manchon en silicone 7 est élastiquement retenu sur l'extrémité du câble 2.

Ensuite, comme on le voit sur la figure 3, l'extrémité 3 du fil conducteur du câble 2 est soudée sur le connecteur 8, plus précisément sur l'embase arquée 9 de ce connecteur, comme on le voit sur la figure 6.

L'ensemble représenté sur la figure 3, c'est-à-dire l'extrémité 3 du câble 2 équipé de son connecteur 8 et du manchon en silicone 7, est placé dans un moule qui n'est pas représenté.

Le moule est fermé et du silicone est injecté.

L'ensemble est chauffé à environ 180°C pour polymériser le silicone. Pour ce faire, on place le moule contenant l'ensemble représenté sur la figure 3 et entouré par du silicone encore pâteux, entre deux blocs métalliques (non représentés), qui sont à une température d'environ 180°. La conduction thermique assure un chauffage très rapide.

Dès lors, du fait de la chaleur, le câble 2 gonfle, comme on l'a montré en 4a sur la figure 4, et en même temps le silicone constituant la pièce 1, se durcit. Le tube 6 prend la forme du câble gonflé 2.

Après quelques minutes le silicone est bien polymérisé et on peut refroidir le moule en le plaçant entre deux blocs métalliques (non représentés) refroidis à l'eau.

En se refroidissant, le câble 2 se rétracte pour reprendre son diamètre d'origine, et la pièce 1 en silicone, plus particulièrement le tube 6, se contracte un peu lui aussi, mais d'une façon moins importante que le câble 2.

Il se forme alors nécessairement un petit jeu entre le silicone de la pièce 1 et la gaine 4 du câble 2, car il n'y a pas d'adhérence du silicone sur ladite gaine. Mais ce petit jeu sera avantageusement comblé par la présence du manchon en silicone 7 qui, d'une part, adhère au silicone de la pièce 1 sous l'effet du chauffage et qui, d'autre part, compense, au refroidissement, la rétraction du câble 2 qui est supérieure à celle de la pièce en silicone 1. On observera à cet égard que quand le câble 2 se contracte, le manchon 7 adhérant au tube 6 de la pièce 1 accompagne la rétraction dudit câble 2 puisque, comme expliqué précédemment, le manchon 7 possède à l'origine un diamètre plus petit que celui du câble.

Ainsi, comme on le comprend, et comme on le voit bien sur la figure 5, l'ensemble ne présente aucun jeu entre tube 6 et câble 2, de sorte que l'étanchéité est parfaitement assurée.

Dès lors, on a réalisé suivant l'invention un dispositif de connexion haute tension ne présentant aucun risque d'arc électrique ou de fuite de courant haute tension pour les usagers.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci entrent dans le cadre des revendications qui suivent.

## Revendications

1. Procédé de surmoulage par chauffage puis refroidissement d'une pièce en silicone (1) sur et autour d'un élément allongé (2) en une autre matière subissant au refroidissement une rétraction supérieure à celle du silicone, caractérisé en ce qu'on introduit un manchon en silicone (7) sur l'élément allongé (2) avant d'effectuer le surmoulage de la pièce en silicone (1) sur lui pour que ledit manchon (7), en adhérant d'une part au silicone de la pièce (1) sous l'effet du chauffage et en compensant d'autre part au refroidissement la rétraction de l'élément allongé (2) qui est supérieure à celle de la pièce en silicone (1), procure une étanchéité parfaite entre ladite pièce et l'élément allongé (2).

2. Procédé selon la revendication 1, caractérisé en ce qu'avant son introduction sur l'élément allongé (2) le manchon en silicone (7) possède un diamètre plus petit que celui dudit élément allongé.

3. Procédé selon la revendication 1 ou 2, caractérisé en ce que la pièce en silicone (1) est moulée pour former un tube (6) prolongeant une ventouse (5), tandis que l'élément allongé (2) entouré par ce tube est un câble électrique formé d'un fil métallique entouré d'une gaine isolante en matière plastique (4).

4. Dispositif de connexion haute tension obtenu par le procédé selon l'une des revendications 1 à 3 et du type comprenant un câble électrique (2) dont une extrémité passe dans un tube (6) débouchant dans une ventouse (5) et porte un connecteur (8) susceptible d'être clippé sur un appareil à alimenter en courant haute tension tel que par exemple un tube cathodique, caractérisé en ce que la ventouse (5) et son tube associé en silicone (6) sont surmoulés sur l'extrémité du câble (2) qui comporte un manchon en silicone (7) interposé entre câble (2) et tube (6) et en ce que ledit connecteur (8) présente la forme d'un U dont l'embase (9) est arquée et convexe en direction de l'intérieur des branches (10) du U pour permettre un soudage encastré du fil conducteur (3) du câble (2) sur le connecteur (8).

5. Dispositif selon la revendication 4, caractérisé en ce que les branches (10) du U comportent à leur extrémité libre des griffes (11) tournées vers l'extérieur du U.
